# EUROPEAN PATENT APPLICATION

(11) **EP 4 823 213 A1**
(43) Date of publication of application: **14.10.2026**
(21) Application number: 24910974.5
(22) Date of filing: 20.12.2024
(51) Int. Cl.: H04W 72/23

(54) **COMMUNICATION METHOD AND APPARATUS**

(30) Priority: 25.12.2023 CN 202311811898
(71) Applicant: Huawei Technologies Co., Ltd., Shenzhen, Guangdong 518129 (CN)
(72) Inventor: ZHAO, Feiran, Shenzhen, Guangdong 518129 (CN); CHEN, Ying, Shenzhen, Guangdong 518129 (CN); QIAO, Yunfei, Shenzhen, Guangdong 518129 (CN); TIE, Xiaolei, Shenzhen, Guangdong 518129 (CN)
(74) Representative: Pfenning, Meinig & Partner mbB
(86) International application number: PCT/CN2024/141085
(87) International publication number: WO 2025/140045

(57) **Abstract**

A communication method and an apparatus are disclosed, and relate to the field of wireless communication technologies. The method includes: A terminal device determines a quantity of sending times of a first message, where the quantity of sending times is an integer greater than or equal to 2, and the first message includes an Msg2 and/or an Msg4; and the terminal device receives the first message from a network device based on the quantity of sending times of the first message. This method can enhance downlink coverage of the first message.

## Description

### CROSS-REFERENCE TO RELATED APPLICATIONS

This application claims priority to Chinese Patent Application No. 202311811898.6, filed with the China National Intellectual Property Administration on December 25, 2023 and entitled "COMMUNICATION METHOD AND APPARATUS", which is incorporated herein by reference in its entirety.

### TECHNICAL FIELD

This application relates to the field of wireless communication technologies, and in particular, to a communication method and an apparatus.

### BACKGROUND

Satellite communication belongs to non-terrestrial network (non-terrestrial network, NTN) communication. Compared with terrestrial communication, satellite communication can provide a wider coverage area. In a satellite communication scenario, a round-trip time latency between a terminal device and a network device is relatively large, and downlink coverage needs to be enhanced to improve reliability.

### SUMMARY

Embodiments of this application provide a communication method and an apparatus, to enhance downlink channel transmission coverage.

According to a first aspect, a communication method is provided. The method may be applied to a communication apparatus. The communication apparatus may be a network device (for example, an access network device) or a module (for example, a circuit, a chip, a chip system, or a processor) in a network device, or may be a logical node, a logical module, or software that can implement all or some functions of an access network device. The method includes: determining a quantity of sending times of a first message, where the quantity of sending times is an integer greater than or equal to 2, and the first message includes an Msg2 and/or an Msg4; and receiving the first message from the network device based on the quantity of sending times of the first message.

In the foregoing implementation, because the first message may be sent a plurality of times, downlink channel transmission coverage corresponding to the first message can be enhanced.

In a possible implementation, the method further includes: reporting a first terminal capability to the network device or requesting the network device to send the first message a plurality of times, where the first terminal capability is a capability of receiving the first message that is sent a plurality of times.

In a possible implementation, reporting the terminal capability to the network device or requesting the network device to send the first message a plurality of times includes: sending an Msg1 to the network device based on a first physical random access channel (physical random access channel, PRACH) resource, where the first PRACH resource belongs to a first PRACH resource group, the first PRACH resource group corresponds to a first sending manner of the first message or corresponds to the first terminal capability, and the first sending manner is performing sending a plurality of times.

In the foregoing implementation, the Msg1 is sent by using the first PRACH resource, to report the terminal capability or request to send the first message a plurality of times, so that signaling overheads can be reduced.

In a possible implementation, the method further includes: receiving first configuration information of the first PRACH resource group from the network device, where the first configuration information indicates that the first PRACH resource group corresponds to the first sending manner of the first message, or indicates that the first PRACH resource group corresponds to the first terminal capability.

In a possible implementation, the first configuration information includes first indication information, or includes second indication information, or includes the first indication information and the second indication information; the first indication information indicates that the first PRACH resource group corresponds to a first sending manner of the Msg2, or indicates that the first PRACH resource group corresponds to the first terminal capability, where the first terminal capability is a capability of receiving the Msg2 that is sent a plurality of times; and the second indication information indicates that the first PRACH resource group corresponds to a first sending manner of the Msg4, or indicates that the first PRACH resource group corresponds to the first terminal capability, where the first terminal capability is a capability of receiving the Msg4 that is sent a plurality of times.

In a possible implementation, the method further includes: receiving second configuration information of the first PRACH resource group from the network device, where the second configuration information indicates PRACH resources included in the first PRACH resource group, and the PRACH resources included in the first PRACH resource group include the first PRACH resource.

In a possible implementation, reporting the first terminal capability to the network device or requesting the network device to send the first message a plurality of times includes: sending an Msg3 to the network device, where the Msg3 includes third indication information, and the third indication information indicates that a terminal device has a capability of receiving the Msg4 that is sent a plurality of times, or the third indication information is used to request to send the Msg4 a plurality of times.

In a possible implementation, the third indication information is located in a message payload of the Msg3; or the third indication information is located in a medium access control (media access control, MAC) subheader of the Msg3.

In a possible implementation, the third indication information is carried in an R field, a logical channel identifier field, or an extended logical channel identifier field of the MAC subheader.

In a possible implementation, reporting the first terminal capability to the network device or requesting the network device to send the first message a plurality of times includes: if a reception performance parameter of the terminal device is lower than a specified requirement, reporting the first terminal capability to the network device or requesting the network device to send the first message a plurality of times.

In the foregoing implementation, the terminal device reports the first terminal capability to the network device or requests the network device to send the first message a plurality of times only when determining that the reception performance parameter is lower than the specified requirement, to trigger a network side to send the first message a plurality of times. Therefore, network resource overheads can be reduced.

In a possible implementation, the reception performance parameter includes one or more of the following: a communication elevation angle or a value range of the communication elevation angle, a receive gain or a receive gain level, or a received signal strength or a received signal strength level; and that the reception performance parameter of the terminal device is lower than the specified requirement includes one or more of the following: The communication elevation angle of the terminal device is less than or equal to a communication elevation angle threshold; or the receive gain of the terminal device is less than or equal to a receive gain threshold, or the receive gain level of the terminal device is less than or equal to a receive gain level threshold; or the received signal strength of the terminal device is less than or equal to a received signal strength threshold, or the received signal strength level of the terminal device is less than or equal to a received signal strength level threshold.

In a possible implementation, the method further includes: sending the reception performance parameter of the terminal device to the network device, where the quantity of sending times of the first message corresponds to the reception performance parameter of the terminal device.

In a possible implementation, determining the quantity of sending times of the first message includes: receiving a second message from the network device, where the second message indicates the quantity of sending times of the first message; and determining the quantity of sending times of the first message based on the second message.

In a possible implementation, before receiving the second message from the network device, the method further includes: receiving a system message from the network device, where the system message indicates M quantities of sending times of the first message, and M is an integer greater than or equal to 2; and the second message includes scheduling signaling, the scheduling signaling indicates the quantity of sending times of the first message, and the quantity of sending times of the first message indicated by the scheduling signaling is one of the M quantities of sending times.

In a possible implementation, the second message includes first scheduling signaling used to schedule the Msg2 and/or second scheduling signaling used to schedule the Msg4, the first scheduling signaling indicates a quantity of sending times of the Msg2, or indicates a quantity of sending times of the Msg2 and a quantity of sending times of the Msg4, and the second scheduling signaling indicates the quantity of sending times of the Msg4.

In a possible implementation, a group of resource information corresponding to a row index indicated by a time domain resource assignment (time domain resource assignment, TDRA) field in the first scheduling signaling includes the quantity of sending times of the Msg2; and/or a group of resource information corresponding to a row index indicated by a TDRA field in the second scheduling signaling includes the quantity of sending times of the Msg4.

In a possible implementation, N bits of a modulation and coding scheme (modulation and coding scheme, MCS) field in the first scheduling signaling indicate the quantity of sending times of the Msg2, the N bits are N bits starting from a most significant bit of the MCS field, and N is an integer greater than or equal to 1; and/or N bits of an MCS field in the second scheduling signaling indicate the quantity of sending times of the Msg4, and the N bits are N bits starting from a most significant bit of the MCS field.

In a possible implementation, a first value of a transport block scaling factor in the first scheduling signaling is associated with one of M quantities of sending times of the Msg2, and M is an integer greater than or equal to 2.

In a possible implementation, the second message is a system message.

In a possible implementation, the second message is the Msg2, and the Msg2 indicates a quantity of sending times of the Msg4.

In a possible implementation, the quantity of sending times of the first message is associated with a quantity of sending times of an Msg4 HARQ-ACK or a quantity of sending times of the Msg3.

In a possible implementation, the method further includes: receiving third configuration information from the network device, where the third configuration information is used to enable demodulation reference signal (demodulation reference signal, DMRS) bundling for a downlink channel corresponding to the first message, and a window length of the DMRS bundling is associated with the quantity of sending times of the first message; or receiving third configuration information and fourth configuration information from the network device, where the third configuration information is used to enable DMRS bundling for a downlink channel corresponding to the first message, and the fourth configuration information indicates a window length of the DMRS bundling; or receiving, from the network device, scheduling signaling used to enable DMRS bundling, where the scheduling signaling is further used to schedule the first message, and a window length of the DMRS bundling is associated with the quantity of sending times of the first message.

According to a second aspect, a communication method is provided. The method may be applied to a communication apparatus. The communication apparatus may be a terminal device or a module (for example, a circuit, a chip, a chip system, or a processor) in a terminal device, or may be a logical node, a logical module, or software that can implement all or some functions of a terminal device. The method includes: determining to send a first message a plurality of times, where the first message includes an Msg2 and/or an Msg4; and sending the first message to the terminal device based on a quantity of sending times of the first message, where the quantity of sending times is an integer greater than or equal to 2.

In a possible implementation, determining to send the first message a plurality of times includes: receiving a first terminal capability reported by the terminal device to the network device or a request for sending the first message a plurality of times, where the first terminal capability is a capability of receiving the first message that is sent a plurality of times; and determining, based on the first terminal capability reported by the terminal device to the network device or the request for sending the first message a plurality of times, to send the first message to the terminal device a plurality of times.

In a possible implementation, receiving the first terminal capability reported by the terminal device to the network device or the request for sending the first message a plurality of times includes: receiving an Msg1 that is sent by the terminal device to the network device based on a first PRACH resource, where the first PRACH resource belongs to a first PRACH resource group, the first PRACH resource group corresponds to a first sending manner of the first message or corresponds to the first terminal capability, and the first sending manner is performing sending a plurality of times.

In a possible implementation, the method further includes: sending first configuration information of the first PRACH resource group, where the first configuration information indicates that the first PRACH resource group corresponds to the first sending manner of the first message, or indicates that the first PRACH resource group corresponds to the first terminal capability.

In a possible implementation, the first configuration information includes first indication information, or includes second indication information, or includes the first indication information and the second indication information; the first indication information indicates that the first PRACH resource group corresponds to a first sending manner of the Msg2, or indicates that the first PRACH resource group corresponds to the first terminal capability, where the first terminal capability is a capability of receiving the Msg2 that is sent a plurality of times; and the second indication information indicates that the first PRACH resource group corresponds to a first sending manner of the Msg4, or indicates that the first PRACH resource group corresponds to the first terminal capability, where the first terminal capability is a capability of receiving the Msg4 that is sent a plurality of times.

In a possible implementation, the method further includes: sending second configuration information of the first PRACH resource group, where the second configuration information indicates PRACH resources included in the first PRACH resource group, and the PRACH resources included in the first PRACH resource group include the first PRACH resource.

In a possible implementation, receiving the first terminal capability reported by the terminal device to the network device or the request for sending the first message a plurality of times includes: receiving an Msg3 from the terminal device, where the Msg3 includes third indication information, and the third indication information indicates that the terminal device has a capability of receiving the Msg4 that is sent a plurality of times, or the third indication information is used to request to send the Msg4 a plurality of times.

In a possible implementation, the third indication information is located in a message payload of the Msg3; or the third indication information is located in a MAC subheader of the Msg3.

In a possible implementation, the third indication information is carried in an R field, a logical channel identifier field, or an extended logical channel identifier field of the MAC subheader.

In a possible implementation, the method further includes: receiving reception performance information from the terminal device; and determining the corresponding quantity of sending times of the first message based on the reception performance information.

In a possible implementation, the method further includes: sending a second message, where the second message indicates the quantity of sending times of the first message.

In a possible implementation, before sending the second message, the method further includes: sending a system message, where the system message indicates M quantities of sending times of the first message, and M is an integer greater than or equal to 2; and the second message includes scheduling signaling, the scheduling signaling indicates the quantity of sending times of the first message, and the quantity of sending times of the first message indicated by the scheduling signaling is one of the M quantities of sending times.

In a possible implementation, the second message includes first scheduling signaling used to schedule the Msg2 and/or second scheduling signaling used to schedule the Msg4, the first scheduling signaling indicates a quantity of sending times of the Msg2, and the second scheduling signaling indicates a quantity of sending times of the Msg4.

In a possible implementation, N bits of an MCS field in the first scheduling signaling indicate the quantity of sending times of the Msg2, the N bits are N bits starting from a most significant bit of the MCS field, and N is an integer greater than or equal to 1; and/or N bits of an MCS field in the second scheduling signaling indicate the quantity of sending times of the Msg4, and the N bits are N bits starting from a most significant bit of the MCS field.

In a possible implementation, a first value of a transport block scaling factor in the first scheduling signaling is associated with one of M quantities of sending times of the Msg2, and M is an integer greater than or equal to 2.

In a possible implementation, the second message is a system message.

In a possible implementation, the second message is the Msg2, and the Msg2 indicates a quantity of sending times of the Msg4.

In a possible implementation, the quantity of sending times of the first message is associated with a quantity of sending times of an Msg4 HARQ-ACK or a quantity of sending times of the Msg3.

In a possible implementation, the method further includes: sending third configuration information, where the third configuration information is used to enable DMRS bundling for a downlink channel corresponding to the first message, and a window length of the DMRS bundling is associated with the quantity of sending times of the first message; or sending third configuration information and fourth configuration information, where the third configuration information is used to enable DMRS bundling for a downlink channel corresponding to the first message, and the fourth configuration information indicates a window length of the DMRS bundling; or sending scheduling signaling used to enable DMRS bundling, where the scheduling signaling is further used to schedule the first message, and a window length of the DMRS bundling is associated with the quantity of sending times of the first message.

According to a third aspect, a communication system is provided. The communication system includes a network device and a terminal device. The terminal device may implement the method according to any implementation of the first aspect, and the network device may implement the method according to any implementation of the second aspect.

According to a fourth aspect, a communication apparatus is provided, including a unit or a module configured to perform the method according to any implementation of the first aspect. Optionally, the communication apparatus includes a processing unit and a transceiver unit. The processing unit is configured to determine a quantity of sending times of a first message, where the quantity of sending times is an integer greater than or equal to 2, and the first message includes an Msg2 and/or an Msg4; and the processing unit is further configured to receive, by using the transceiver unit, the first message from a network device based on the quantity of sending times of the first message.

In a possible implementation, the processing unit is further configured to: report a first terminal capability to the network device by using the transceiver unit or request to send the first message a plurality of times, where the first terminal capability is a capability of receiving the first message that is sent a plurality of times.

In a possible implementation, the processing unit is specifically configured to send, by using the transceiver unit, an Msg1 to the network device based on a first PRACH resource, where the first PRACH resource belongs to a first PRACH resource group, the first PRACH resource group corresponds to a first sending manner of the first message or corresponds to the first terminal capability, and the first sending manner is performing sending a plurality of times.

In a possible implementation, the transceiver unit is further configured to receive first configuration information of the first PRACH resource group from the network device, where the first configuration information indicates that the first PRACH resource group corresponds to the first sending manner of the first message, or indicates that the first PRACH resource group corresponds to the first terminal capability.

In a possible implementation, the first configuration information includes first indication information, or includes second indication information, or includes the first indication information and the second indication information; the first indication information indicates that the first PRACH resource group corresponds to a first sending manner of the Msg2, or indicates that the first PRACH resource group corresponds to the first terminal capability, where the first terminal capability is a capability of receiving the Msg2 that is sent a plurality of times; and the second indication information indicates that the first PRACH resource group corresponds to a first sending manner of the Msg4, or indicates that the first PRACH resource group corresponds to the first terminal capability, where the first terminal capability is a capability of receiving the Msg4 that is sent a plurality of times.

In a possible implementation, the transceiver unit is further configured to receive second configuration information of the first PRACH resource group from the network device, where the second configuration information indicates PRACH resources included in the first PRACH resource group, and the PRACH resources included in the first PRACH resource group include the first PRACH resource.

In a possible implementation, the processing unit is specifically configured to send an Msg3 to the network device by using the transceiver unit, where the Msg3 includes third indication information, and the third indication information indicates that a terminal device has a capability of receiving the Msg4 that is sent a plurality of times, or the third indication information is used to request to send the Msg4 a plurality of times.

In a possible implementation, the third indication information is located in a message payload of the Msg3; or the third indication information is located in a medium access control (media access control, MAC) subheader of the Msg3.

In a possible implementation, the third indication information is carried in an R field, a logical channel identifier field, or an extended logical channel identifier field of the MAC subheader.

In a possible implementation, the processing unit is specifically configured to: if a reception performance parameter of the terminal device is lower than a specified requirement, report the first terminal capability to the network device by using the transceiver unit, or request to send the first message a plurality of times.

In a possible implementation, the reception performance parameter includes one or more of the following: a communication elevation angle or a value range of the communication elevation angle, a receive gain or a receive gain level, or a received signal strength or a received signal strength level; and that the reception performance parameter of the terminal device is lower than the specified requirement includes one or more of the following: The communication elevation angle of the terminal device is less than or equal to a communication elevation angle threshold; or the receive gain of the terminal device is less than or equal to a receive gain threshold, or the receive gain level of the terminal device is less than or equal to a receive gain level threshold; or the received signal strength of the terminal device is less than or equal to a received signal strength threshold, or the received signal strength level of the terminal device is less than or equal to a received signal strength level threshold.

In a possible implementation, the processing unit is further configured to send the reception performance parameter of the terminal device to the network device by using the transceiver unit, where the quantity of sending times of the first message corresponds to the reception performance parameter of the terminal device.

In a possible implementation, the transceiver unit is specifically configured to: receive a second message from the network device, where the second message indicates the quantity of sending times of the first message; and determine the quantity of sending times of the first message based on the second message.

In a possible implementation, before the transceiver unit receives the second message from the network device, the transceiver unit further receives a system message from the network device, where the system message indicates M quantities of sending times of the first message, and M is an integer greater than or equal to 2; and the second message includes scheduling signaling, the scheduling signaling indicates the quantity of sending times of the first message, and the quantity of sending times of the first message indicated by the scheduling signaling is one of the M quantities of sending times.

In a possible implementation, the second message includes first scheduling signaling used to schedule the Msg2 and/or second scheduling signaling used to schedule the Msg4, the first scheduling signaling indicates a quantity of sending times of the Msg2, and the second scheduling signaling indicates a quantity of sending times of the Msg4.

In a possible implementation, a group of resource information corresponding to a row index indicated by a TDRA field in the first scheduling signaling includes the quantity of sending times of the Msg2; and/or a group of resource information corresponding to a row index indicated by a TDRA field in the second scheduling signaling includes the quantity of sending times of the Msg4.

In a possible implementation, N bits of an MCS field in the first scheduling signaling indicate the quantity of sending times of the Msg2, the N bits are N bits starting from a most significant bit of the MCS field, and N is an integer greater than or equal to 1; and/or N bits of an MCS field in the second scheduling signaling indicate the quantity of sending times of the Msg4, and the N bits are N bits starting from a most significant bit of the MCS field.

In a possible implementation, a first value of a transport block scaling factor in the first scheduling signaling is associated with one of M quantities of sending times of the Msg2, and M is an integer greater than or equal to 2.

In a possible implementation, the second message is a system message.

In a possible implementation, the second message is the Msg2, and the Msg2 indicates a quantity of sending times of the Msg4.

In a possible implementation, the quantity of sending times of the first message is associated with a quantity of sending times of an Msg4 HARQ-ACK or a quantity of sending times of the Msg3.

In a possible implementation, the transceiver unit is further configured to: receive third configuration information from the network device, where the third configuration information is used to enable DMRS bundling for a downlink channel corresponding to the first message, and a window length of the DMRS bundling is associated with the quantity of sending times of the first message; or receive third configuration information and fourth configuration information from the network device, where the third configuration information is used to enable DMRS bundling for a downlink channel corresponding to the first message, and the fourth configuration information indicates a window length of the DMRS bundling; or receive, from the network device, scheduling signaling used to enable DMRS bundling, where the scheduling signaling is further used to schedule the first message, and a window length of the DMRS bundling is associated with the quantity of sending times of the first message.

According to a fifth aspect, a communication apparatus is provided, including a unit or a module configured to perform the method according to any implementation of the second aspect. Optionally, the communication apparatus includes a processing unit and a transceiver unit. The processing unit is configured to determine to send a first message a plurality of times, where the first message includes an Msg2 and/or an Msg4; and the processing unit is further configured to send the first message to a terminal device by using the transceiver unit based on a quantity of sending times of the first message, where the quantity of sending times is an integer greater than or equal to 2.

In a possible implementation, the transceiver unit is specifically configured to receive a first terminal capability reported by the terminal device to the network device or a request for sending the first message a plurality of times, where the first terminal capability is a capability of receiving the first message that is sent a plurality of times; and the processing unit is specifically configured to determine, based on the first terminal capability reported by the terminal device to the network device or the request for sending the first message a plurality of times, to send the first message to the terminal device a plurality of times.

In a possible implementation, the transceiver unit is specifically configured to receive an Msg1 that is sent by the terminal device to the network device based on a first PRACH resource, where the first PRACH resource belongs to a first PRACH resource group, the first PRACH resource group corresponds to a first sending manner of the first message or corresponds to the first terminal capability, and the first sending manner is performing sending a plurality of times.

In a possible implementation, the processing unit is further configured to send first configuration information of the first PRACH resource group by using the transceiver unit, where the first configuration information indicates that the first PRACH resource group corresponds to the first sending manner of the first message, or indicates that the first PRACH resource group corresponds to the first terminal capability.

In a possible implementation, the first configuration information includes first indication information, or includes second indication information, or includes the first indication information and the second indication information; the first indication information indicates that the first PRACH resource group corresponds to a first sending manner of the Msg2, or indicates that the first PRACH resource group corresponds to the first terminal capability, where the first terminal capability is a capability of receiving the Msg2 that is sent a plurality of times; and the second indication information indicates that the first PRACH resource group corresponds to a first sending manner of the Msg4, or indicates that the first PRACH resource group corresponds to the first terminal capability, where the first terminal capability is a capability of receiving the Msg4 that is sent a plurality of times.

In a possible implementation, the processing unit is further configured to send second configuration information of the first PRACH resource group by using the transceiver unit, where the second configuration information indicates PRACH resources included in the first PRACH resource group, and the PRACH resources included in the first PRACH resource group include the first PRACH resource.

In a possible implementation, the transceiver unit is specifically configured to receive an Msg3 from the terminal device, where the Msg3 includes third indication information, and the third indication information indicates that the terminal device has a capability of receiving the Msg4 that is sent a plurality of times, or the third indication information is used to request to send the Msg4 a plurality of times.

In a possible implementation, the third indication information is located in a message payload of the Msg3; or the third indication information is located in a MAC subheader of the Msg3.

In a possible implementation, the third indication information is carried in an R field, a logical channel identifier field, or an extended logical channel identifier field of the MAC subheader.

In a possible implementation, the transceiver unit is further configured to: receive reception performance information from the terminal device; and determine the corresponding quantity of sending times of the first message based on the reception performance information.

In a possible implementation, the processing unit is further configured to send a second message by using the transceiver unit, where the second message indicates the quantity of sending times of the first message.

In a possible implementation, the processing unit is further configured to: before sending the second message by using the transceiver unit, send a system message by using the transceiver unit, where the system message indicates M quantities of sending times of the first message, and M is an integer greater than or equal to 2; and the second message includes scheduling signaling, the scheduling signaling indicates the quantity of sending times of the first message, and the quantity of sending times of the first message indicated by the scheduling signaling is one of the M quantities of sending times.

In a possible implementation, the second message includes first scheduling signaling used to schedule the Msg2 and/or second scheduling signaling used to schedule the Msg4, the first scheduling signaling indicates a quantity of sending times of the Msg2, and the second scheduling signaling indicates a quantity of sending times of the Msg4.

In a possible implementation, N bits of an MCS field in the first scheduling signaling indicate the quantity of sending times of the Msg2, the N bits are N bits starting from a most significant bit of the MCS field, and N is an integer greater than or equal to 1; and/or N bits of an MCS field in the second scheduling signaling indicate the quantity of sending times of the Msg4, and the N bits are N bits starting from a most significant bit of the MCS field.

In a possible implementation, a first value of a transport block scaling factor in the first scheduling signaling is associated with one of M quantities of sending times of the Msg2, and M is an integer greater than or equal to 2.

In a possible implementation, the second message is a system message.

In a possible implementation, the second message is the Msg2, and the Msg2 indicates a quantity of sending times of the Msg4.

In a possible implementation, the quantity of sending times of the first message is associated with a quantity of sending times of an Msg4 HARQ-ACK or a quantity of sending times of the Msg3.

In a possible implementation, the processing unit is further configured to: send third configuration information by using the transceiver unit, where the third configuration information is used to enable DMRS bundling for a downlink channel corresponding to the first message, and a window length of the DMRS bundling is associated with the quantity of sending times of the first message; or send third configuration information and fourth configuration information by using the transceiver unit, where the third configuration information is used to enable DMRS bundling for a downlink channel corresponding to the first message, and the fourth configuration information indicates a window length of the DMRS bundling; or send, by using the transceiver unit, scheduling signaling used to enable DMRS bundling, where the scheduling signaling is further used to schedule the first message, and a window length of the DMRS bundling is associated with the quantity of sending times of the first message.

According to a sixth aspect, a communication apparatus is provided, including one or more processors configured to: perform the method according to any implementation of the first aspect, perform the method according to any implementation of the second aspect.

According to a seventh aspect, a readable storage medium is provided. The readable storage medium stores a program. When the program is executed by a communication apparatus, the method according to any implementation of the first aspect is implemented, or the method according to any implementation of the second aspect is implemented.

According to an eighth aspect, a chip system is provided, including: a memory, configured to store a computer program; and a processor. After the processor invokes the computer program from the memory and runs the computer program, a communication apparatus on which the chip system is installed is enabled to perform the method according to any implementation of the first aspect, or perform the method according to any implementation of the second aspect.

According to a ninth aspect, a computer program product is provided. When the computer program product is invoked by a computer, the computer is enabled to perform the method according to any implementation of the first aspect, or perform the method according to any implementation of the second aspect.

### BRIEF DESCRIPTION OF DRAWINGS

FIG. 1 is a diagram of an architecture of a communication system to which an embodiment of this application is applicable;
FIG. 2A, FIG. 2B, and FIG. 2C are respectively diagrams of an architecture of an NTN communication system to which an embodiment of this application is applicable;
FIG. 3 is a schematic flowchart of a communication method according to an embodiment of this application;
FIG. 4A and FIG. 4B are diagrams of content included in a MAC subheader of an Msg3 according to an embodiment of this application;
FIG. 5 is a diagram of a structure of a communication apparatus according to an embodiment of this application; and
FIG. 6 is a diagram of a structure of another communication apparatus according to an embodiment of this application.

### DESCRIPTION OF EMBODIMENTS

In a random access process of a conventional 5th generation (5th generation, 5G) communication system, the following four messages (Msg) are exchanged between a terminal device and a network device:
Msg1: one or more preambles sent by the terminal device based on random access configuration and downlink measurement;
Msg2: in response to the Msg1, providing further information and scheduling for Msg3 by using the network device, where Msg2 may also be referred to as a random access response (random access response, RAR) message, and the RAR message includes uplink grant (UL grant, where UL is short for uplink) information;
Msg3: an L2 (layer2)/L3 (layer3) message, where the Msg3 is, for example, a radio resource control (radio resource control, RRC) connection setup request message; and
Msg4: dispute resolution, where the Msg4 is, for example, an RRC connection setup complete message.

Before the terminal device sends the Msg1, the terminal device obtains downlink synchronization, obtains a random access configuration, and performs measurement.

In a current communication protocol, repetition (repetition) is not supported for transmission of the Msg2, and repetition (repetition) is also not supported for transmission of the Msg4. That repetition (repetition) is not supported for transmission of the Msg2 may be understood as meaning that the Msg2 is not supported to be sent a plurality of times. Similarly, that repetition (repetition) is not supported for transmission of the Msg4 may be understood as meaning that the Msg4 is not supported to be sent a plurality of times.

Downlink coverage enhancement in a satellite scenario will be one of potential research topics in R19, including coverage enhancement at physical layer channel and link levels, and enhancement of satellite parameters, for example, there are a large number of beam positions in a satellite coverage area, and satellite power is limited. Beam management technologies such as power sharing between satellite beams and beam hopping are considered to resolve problems of synchronization signal scanning, data channel transmission, and the like in the satellite coverage area. According to 3GPP R18 satellite parameter assumptions (TR38.821), equivalent isotropically radiated power (equivalent isotropically radiated power, EIRP) density of a single satellite beam is high. Considering multi-beam-position coverage (for example, based on 3GPP satellite antenna assumptions, a 3-dB width of a main lobe of a satellite beam is 4.4 degrees, and for the beam of this width in an LEO600 scenario, when a minimum elevation angle of a terminal is 30 degrees, more than 1300 beam positions are required to fully cover a coverage area of a single satellite), if the satellite simultaneously transmits a plurality of beams according to the existing parameter assumptions, power of the entire satellite becomes excessively high. A subsequent discussion direction based on satellite parameters in R19 is to reduce an activation proportion of beam positions in a coverage area (for example, only 10% of the beam positions in the satellite coverage area are activated at the same time), and consider the dynamic inter-beam power sharing strategy and the beam hopping mechanism, to ensure full beam position coverage.

Another impact caused by the power sharing between satellite beams is a reduction in a link budget for downlink data channel transmission. This is mainly reflected in a reduction in satellite downlink beam EIRP (compared with a downlink single beam EIRP parameter defined in SET-1, SET-2, or the like in TR38.821). Therefore, for a plurality of downlink data channels discussed based on R18, for example, the Msg2 physical downlink shared channel (physical downlink shared channel, PDSCH) and Msg4 PDSCH, a coverage gap (coverage gap, to be specific, a carrier to noise ratio (carrier to noise Ratio, CNR) of the link budget is less than a signal to noise ratio (signal to noise ratio, SNR) required by channel decoding threshold) occurs.

Therefore, embodiments of this application provide a communication method and a related apparatus that can implement the method, to enhance downlink channel transmission, reduce a decoding threshold of a link, and improve a coverage capability.

The following describes embodiments of this application with reference to the accompanying drawings.

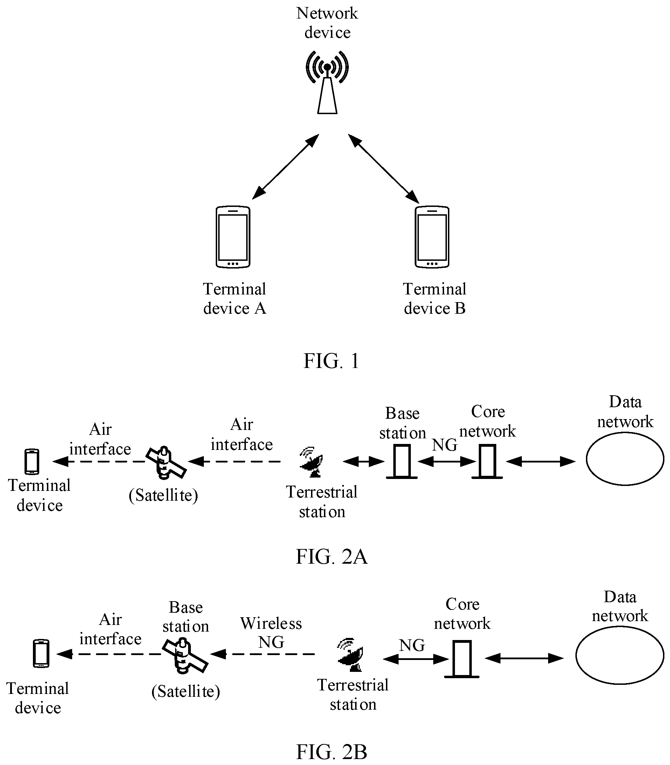

Embodiments of this application may be applied to various communication systems, for example, a 5G communication system and an NTN communication system, and may be further applied to a communication system evolved after 5G. FIG. 1 is a diagram of an architecture of a communication system according to an embodiment of this application. The communication system includes a network device and a terminal device. For example, there is one network device, and there are two terminal devices (a terminal device A and a terminal device B). The terminal device A and the terminal device B may separately or simultaneously communicate with the network device. It should be noted that a quantity of terminal devices and a quantity of network devices in the communication system shown in FIG. 1 are not limited in embodiments of this application.

The terminal device may also be referred to as a terminal (terminal), user equipment (user equipment, UE), a mobile station (mobile station, MS), a mobile terminal, or the like, and is an apparatus or a device having a wireless communication function. The terminal device may be widely used in various scenarios, for example, machine type communication (machine type communication, MTC), an internet of things (internet of things, IoT), vehicle to everything (vehicle to everything, V2X), virtual reality, augmented reality, industrial control, self-driving, telemedicine, a smart grid, smart furniture, a smart office, a smart wearable, smart transportation, and a smart city. The terminal device may be a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), customer-premises equipment (customer-premises equipment, CPE), a smart point of sale (point of sale, POS) machine, a wearable device, a vehicle, an uncrewed aerial vehicle, a helicopter, a plane, a ship, a robot, a mechanical arm, a smart home device, an MTC device, a terrestrial station, or the like. A specific technology and a specific device form that are used by the terminal device are not limited in embodiments of this application.

The network device may also be referred to as an access network (access network, AN) device or a radio access network (radio access network, RAN) device, and is an apparatus or a device that may be deployed in a radio access network to provide a wireless communication function for the terminal device. The network device may be a base station like an artificial earth satellite and a high altitude aircraft used for wireless communication, for example, a medium earth orbit (medium earth orbit, MEO) satellite or a low earth orbit (low earth orbit, LEO) satellite of a non-geostationary earth orbit (non-geostationary earth orbit, NGEO), a high altitude platform station (high altitude platform station, HAPS), an evolved NodeB (evolved NodeB, eNB), and a 5G base station (gNB). Optionally, the network device in embodiments of this application may include various forms of base stations, for example, a macro base station, a micro base station (also referred to as a small cell), a relay station, an access point, a device that implements a base station function in a communication system evolved after 5G, a transmission reception point (transmission reception point, TRP), a transmitting point (transmitting point, TP), a mobile switching center, and a device that performs a base station function in device-to-device (device-to-device, D2D), vehicle-to-everything (vehicle-to-everything, V2X), and machine-to-machine (machine-to-machine, M2M) communication, and may further include a central unit (central unit, CU), a distributed unit (distributed unit, DU), and the like in a cloud access network (cloud radio access network, C-RAN) system. This is not specifically limited in embodiments of this application.

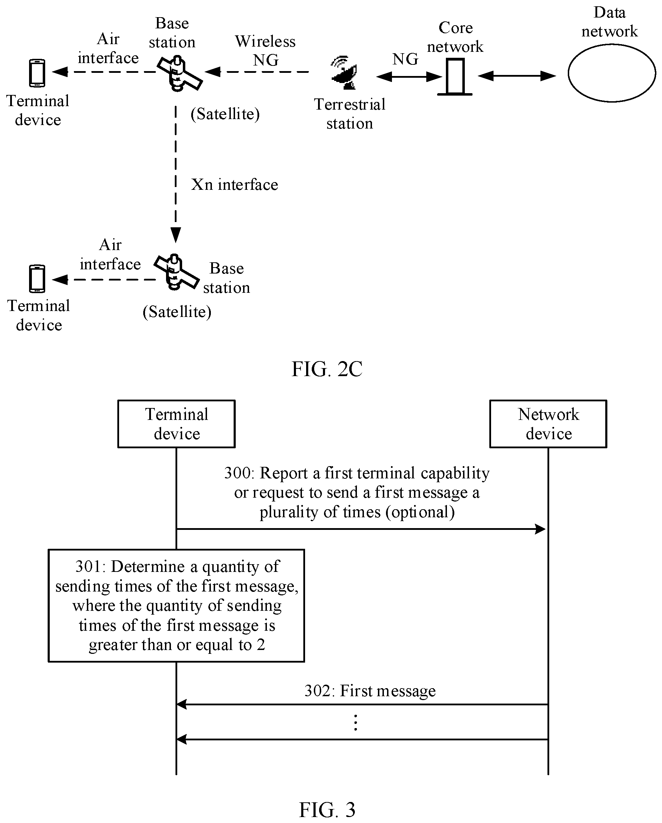

For example, the network device is a satellite. Communication scenarios to which embodiments of this application are specifically applied may be shown in FIG. 2A, FIG. 2B, and FIG. 2C.

In the scenario shown in FIG. 2A, a base station is deployed on the ground, a satellite is connected to a terrestrial station through an air interface, and the terrestrial station may be connected to the base station through a radio or line link. A terminal device on the ground accesses a mobile communication network through an air interface (where there may be various types of air interfaces, for example, a 5G air interface), and the satellite is used as a transmission node to forward information about the terminal device.

In the scenario shown in FIG. 2B, a base station is deployed on a satellite, the satellite is connected to a terrestrial station through an air interface, and the terrestrial station may be connected to a core network through a radio or line link. A terminal device on the ground communicates with a satellite base station through an air interface, to access a mobile communication network. The satellite serving as the base station is connected to the terrestrial station through an NG interface. The terrestrial station is connected to the core network through an NG interface. The NG interface may be in a wireless form or a wired form.

Compared with the scenario shown in FIG. 2B, the scenario shown in FIG. 2C adds a communication scenario between satellite base stations. Specifically, the satellite base stations may communicate with each other through an Xn interface.

In FIG. 2A to FIG. 2C, the terminal device may include various types of terminal devices that support new radio, for example, the various types of terminals listed above. The terminal device may access a satellite network through the air interface and initiates services such as calls and internet access.

The base station is mainly configured to: provide a radio access service, schedule a radio resource to an accessing terminal device, and provide a reliable radio transmission protocol, data encryption protocol, and the like.

The core network is mainly configured to provide functions such as user access control, mobility management, session management, user security authentication, and charging. The core network includes a plurality of functional units that may be classified into control-plane functional entities and data-plane functional entities.

The terrestrial station is mainly responsible for forwarding signaling and service data between the satellite and the base station or between the satellite and the core network.

The air interface indicates a radio link between the terminal device and the base station.

The Xn interface indicates an interface between the satellite base stations, and is mainly used for signaling exchange such as switching.

The NG interface indicates an interface between the base station and the core network, an interface between the terrestrial station and the core network, or an interface between the satellite base station and the terrestrial station (in this case, the interface is a radio link), and is mainly used for exchange of non-access stratum (non-access stratum, NAS) signaling or other signaling of the core network and service data of a user.

Based on the system architecture shown in FIG. 1, or FIG. 2A, FIG. 2B, or FIG. 2C, FIG. 3 is a schematic flowchart of a communication method according to an embodiment of this application.

As shown in FIG. 3, the procedure may include the following steps.

Step 301: A terminal device determines a quantity of sending times of a first message, where the quantity of sending times is an integer greater than or equal to 2, and the first message includes an Msg2 and/or an Msg4.

In a possible implementation, a network device sends a second message to the terminal device, where the second message indicates a quantity of sending times of the Msg2 and/or a quantity of sending times of the Msg4. Correspondingly, the terminal device determines the quantity of sending times of the Msg2 and/or the quantity of sending times of the Msg4 based on the second message.

In a possible implementation, when the network device determines that a specific condition is met, for example, when there may be a large quantity of channels that need to be enhanced currently, the network device may determine to send the first message a plurality of times, and further indicate, by using the second message, the quantity of sending times of the first message.

Optionally, if the network device determines that a current communication scenario is a non-terrestrial network (NTN) communication scenario, the network device determines to send the first message a plurality of times. The network device may determine, by using a communication frequency band, whether the current communication scenario is the NTN communication scenario. For example, if the current frequency band is n255 or n256, it may be determined that the current communication scenario is the NTN communication scenario.

Optionally, if the network device configures, in system information, a quantity of Msg3 repetitions (repetitions) and a reference signal received power (reference signal received power, RSRP) threshold used to trigger the Msg3 repetition, the network device determines to send the first message a plurality of times. The system information is, for example, a system information block (system information block, SIB).

Optionally, if the network device configures, in the system information, a quantity of Msg4 hybrid automatic repeat request-acknowledgment (hybrid automatic repeat request-ACKnowledgement, HARQ-ACK) repetitions and an RSRP threshold used to trigger the Msg4 HARQ-ACK repetition, the network device determines to send the first message a plurality of times. The system information is, for example, a system information block (system information block, SIB).

Optionally, if the network device determines at least two of the following cases, it may be determined that in the current communication scenario, there may be a large quantity of channels that need to be enhanced, and therefore it is determined that the first message is sent a plurality of times: (1) the current communication scenario is the NTN communication scenario; (2) the network device configures, in the system information, a quantity of Msg3 repetitions and an RSRP threshold used to trigger the Msg3 repetition; and (3) the network device configures, in the system information, a quantity of Msg4 HARQ-ACK repetitions and an RSRP threshold used to trigger the Msg4 HARQ-ACK repetition.

In a possible implementation, the second message is a system message. In other words, the quantity of sending times of the first message may be broadcast by using the system message, and the quantity of sending times of the first message is configured at a cell level. For a terminal device having a first terminal capability in a cell, the first message is received based on a same quantity of sending times. For a terminal device that does not have the first terminal capability, the terminal device attempts to decode only the first message received for the first time. The first terminal capability is a capability of receiving the first message that is sent a plurality of times. "Sent a plurality of times" is relative to "single sending" or "sent only once", and may be understood as meaning that a quantity of sending times is greater than or equal to 2, or may be understood as repeated sending.

Optionally, the system message may be a SIB, and indication information may be set in the SIB to indicate a quantity of sending times of the Msg2 and/or a quantity of sending times of the Msg4.

In a possible implementation, the second message is scheduling signaling, for example, downlink control information (downlink control information, DCI) or a medium access control control element (media access control control element, MAC CE). In other words, the network device may send the scheduling signaling to the terminal device having the first terminal capability, to configure the quantity of sending times of the first message at a UE level.

In a possible implementation, the second message is first scheduling signaling used to schedule the Msg2, and the first scheduling signaling indicates the quantity of sending times of the Msg2 or indicates the quantity of sending times of the Msg2 and the quantity of sending times of the Msg4. For example, the first scheduling signaling is DCI format 1_0 scrambled by using a random access-radio network temporary identifier (random access-radio network temporary identifier, RA-RNTI).

Optionally, a group of resource information corresponding to a row index (row index) indicated by a time domain resource assignment (time domain resource assignment, TDRA) field in the first scheduling signaling includes the quantity of sending times of the Msg2. In this embodiment of this application, the TDRA field may be redefined, so that the row index indicated by the field indicates a table provided in this embodiment of this application. Each row index in the table corresponds to one group of resource parameters, including the quantity of sending times of the Msg2.

Table 1 shows a table provided in a related technology. Table 2 shows a table provided in this embodiment of this application.

**Table 1: Default PDSCH time domain resource assignment A for a normal cyclic prefix (cyclic prefix, CP)**

| Row index | DMRS-TypeA-Position | PDSCH mapping type | *K*₀ | S | L |
|---|---|---|---|---|---|
| 1 | 2 | Type A | 0 | 2 | 12 |
| | 3 | Type A | 0 | 3 | 11 |
| 2 | 2 | Type A | 0 | 2 | 10 |
| | 3 | Type A | 0 | 3 | 9 |
| 3 | 2 | Type A | 0 | 2 | 9 |
| | 3 | Type A | 0 | 3 | 8 |
| 4 | 2 | Type A | 0 | 2 | 7 |
| | 3 | Type A | 0 | 3 | 6 |
| 5 | 2 | Type A | 0 | 2 | 5 |
| | 3 | Type A | 0 | 3 | 4 |
| 6 | 2 | Type B | 0 | 9 | 4 |
| | 3 | Type B | 0 | 10 | 4 |
| 7 | 2 | Type B | 0 | 4 | 4 |
| | 3 | Type B | 0 | 6 | 4 |
| 8 | 2,3 | Type B | 0 | 5 | 7 |
| 9 | 2,3 | Type B | 0 | 5 | 2 |
| 10 | 2,3 | Type B | 0 | 9 | 2 |
| 11 | 2,3 | Type B | 0 | 12 | 2 |
| 12 | 2,3 | Type A | 0 | 1 | 13 |
| 13 | 2,3 | Type A | 0 | 1 | 6 |
| 14 | 2,3 | Type A | 0 | 2 | 4 |
| 15 | 2,3 | Type B | 0 | 4 | 7 |
| 16 | 2,3 | Type B | 0 | 8 | 4 |

In this embodiment of this application, Table 1 is modified. To be specific, when the foregoing scenario is met (for example, one or more of the following scenarios are met: a current communication scenario is an NTN communication scenario, a quantity of Msg3 repetitions and an RSRP threshold used to trigger the Msg3 repetition are configured, and a quantity of Msg4 HARQ-ACK repetitions and an RSRP threshold used to trigger the Msg4 HARQ-ACK repetition are configured), a new table is introduced, PDSCH mapping Type of the type B is removed from the newly introduced table, and a column of configuration information of a quantity of sending times (for example, a column "Nrep" in Table 2) is introduced. The newly introduced table is shown in Table 2.

**Table 2: Default PDSCH time domain resource assignment A for a normal cyclic prefix (cyclic prefix, CP)**

| Row index | DMRS-TypeA-Position | PDSCH mapping type | *K*₀ | S | L | Nrep |
|---|---|---|---|---|---|---|
| 1 | 2 | Type A | 0 | 2 | 12 | 2 |
| | 3 | Type A | 0 | 3 | 11 | 2 |
| 2 | 2 | Type A | 0 | 2 | 10 | 2 |
| | 3 | Type A | 0 | 3 | 9 | 2 |
| 3 | 2 | Type A | 0 | 2 | 9 | 2 |
| | 3 | Type A | 0 | 3 | 8 | 2 |
| 4 | 2 | Type A | 0 | 2 | 7 | 2 |
| | 3 | Type A | 0 | 3 | 6 | 2 |
| 5 | 2 | Type A | 0 | 2 | 5 | 2 |
| | 3 | Type A | 0 | 3 | 4 | 2 |
| 6 | 2,3 | Type A | 0 | 1 | 13 | 2 |
| 7 | 2,3 | Type A | 0 | 1 | 6 | 2 |
| 8 | 2,3 | Type A | 0 | 2 | 4 | 2 |
| 9 | 2 | Type A | 0 | 2 | 12 | 4 |
| | 3 | Type A | 0 | 3 | 11 | 4 |
| 10 | 2 | Type A | 0 | 2 | 10 | 4 |
| | 3 | Type A | 0 | 3 | 9 | 4 |
| 11 | 2 | Type A | 0 | 2 | 9 | 4 |
| | 3 | Type A | 0 | 3 | 8 | 4 |
| 12 | 2 | Type A | 0 | 2 | 7 | 4 |
| | 3 | Type A | 0 | 3 | 6 | 4 |
| 13 | 2 | Type A | 0 | 2 | 5 | 4 |
| | 3 | Type A | 0 | 3 | 4 | 4 |
| 14 | 2,3 | Type A | 0 | 1 | 13 | 4 |
| 15 | 2,3 | Type A | 0 | 1 | 6 | 4 |
| 16 | 2,3 | Type A | 0 | 2 | 4 | 4 |

Based on Table 2, after receiving the first scheduling signaling, the terminal device queries Table 2 based on the row index in the TDRA field in the first scheduling signaling, to obtain the quantity of sending times of the Msg2 corresponding to the row index.

Optionally, N bits of a modulation and coding scheme (modulation and coding scheme, MCS) field in the first scheduling signaling indicate the quantity of sending times of the Msg2, the N bits are N bits starting from a most significant bit of the MCS field, and N is an integer greater than or equal to 1. The MCS field is a 5-bit field. It is considered that in a scenario in which the Msg2 needs to be sent a plurality of times, communication quality is poor, and a network side generally does not schedule a high MCS level. Therefore, two most significant bits or one most significant bit of the MCS field may be reused to indicate the quantity of sending times of the Msg2.

For example, two bits are to indicate one of four quantities {1, 2, 4, 8} of sending times. For example, a value "00" of the two bits indicates a quantity of sending times is 1, a value "01" indicates a quantity of sending times is 2, a value "10" indicates a quantity of sending times is 4, and a value "11" indicates a quantity of sending times is 8. One bit is used to indicate one of two quantities {2, 4} of sending times. A mapping relationship between a value of the two bits or a value of the one bit and the quantity of sending times may be pre-agreed, or may be configured by the network device. This is not limited in this application.

For another example, when there are no more than four quantities of sending times of the Msg2 configured by the network device by using a system message (for example, a SIB or a broadcast message), two bits of the MCS field may be used to indicate one quantity of sending times. For example, when the network device configures three quantities of sending times of the Msg2 by using the SIB, a value "00" of the two bits of the MCS field is mapped to a first quantity of sending times configured in the SIB, a value "01" is mapped to a second quantity of sending times configured in the SIB, a value "10" is mapped to a third quantity of sending times configured in the SIB, and a value "11" is not mapped.

Optionally, a first value of a transport block (transport block, TB) scaling factor (scaling) in the first scheduling signaling is associated with one of M quantities of sending times of the Msg2, where M is an integer greater than or equal to 2. A TB scaling field is two bits, and four codepoints (codepoints) of the two bits are respectively 00, 01, 10, and 11, where "11" is reserved (reserved), as shown in Table 3.

**Table 3: Scaling factors (Scaling factors) of N_{info} of a paging RNTI (P-RNTI), an RA-RNTI, and an MSGE-RNTI**

| TB scaling field | Scaling factor S |
|---|---|
| 00 | 1 |
| 01 | 0.5 |
| 10 | 0.25 |
| 11 | Reserved |

In this embodiment of this application, the codepoint "11" of the TB scaling field may be reused to indicate one of the quantities {2, 4, 8} of sending times of the Msg2. A mapping relationship may be configured by using a SIB or may be pre-agreed.

In a possible implementation, the second message is second scheduling signaling used to schedule the Msg4, and the second scheduling signaling indicates the quantity of sending times of the Msg4. For example, the second scheduling signaling is DCI format 1_0 scrambled by using a temporary cell (temporary cell, TC) RNTI, and the DCI is also referred to as DCI format 1_0 with CRC scrambled by TC-RNTI.

Optionally, a group of resource information corresponding to a row index (row index) indicated by a TDRA field in the second scheduling signaling includes the quantity of sending times of the Msg4. In this embodiment of this application, the TDRA field may be redefined, so that the row index indicated by the field indicates a table provided in this embodiment of this application. Each row index in the table corresponds to one group of resource parameters, including the quantity of sending times of the Msg4. An example of the table may be shown in Table 2.

Optionally, N bits of an MCS field in the second scheduling signaling indicate the quantity of sending times of the Msg4, the N bits are N bits starting from a most significant bit of the MCS field, and N is an integer greater than or equal to 1. The MCS field is a 5-bit field. It is considered that in a scenario in which the Msg4 needs to be sent a plurality of times, communication quality is poor, and a network side generally does not schedule a high MCS level. Therefore, two most significant bits or one most significant bit of the MCS field may be reused to indicate the quantity of sending times of the Msg4.

For example, one of four quantities {1, 2, 4, 8} of sending times is indicated by using the two bits. For example, a quantity of sending times indicated by a value "00" of the two bits is 1, a quantity of sending times indicated by a value "01" is 2, a quantity of sending times indicated by a value "10" is 4, and a quantity of sending times indicated by a value "11" is 8. One of two quantities {2, 4} of sending times is indicated by using one bit. A mapping relationship between a value of two bits or a value of one bit and the quantity of sending times may be pre-agreed, or may be configured by the network device. This is not limited in this application.

For another example, when there are no more than four quantities of sending times of the Msg4 configured by the network device by using a system message (for example, a SIB or a broadcast message), two bits of the MCS field may be used to indicate one quantity of sending times. For example, when the network device configures three quantities of sending times of the Msg4 by using the SIB, a value "00" of the two bits of the MCS field is mapped to a first quantity of sending times configured in the SIB, a value "01" is mapped to a second quantity of sending times configured in the SIB, a value "10" is mapped to a third quantity of sending times configured in the SIB, and a value "11" is not mapped.

In a possible implementation, the second message is the Msg2, and the Msg2 indicates a quantity of sending times of the Msg4. In other words, the quantity of sending times of the Msg4 may be indicated in scheduling signaling other than the scheduling signaling for the Msg4. In this embodiment of this application, the network device may enable, to the terminal device by using one bit reserved in a channel state information (channel state information, CSI) request field (CSI request field) in the UL grant information in the Msg2, the Msg4 to be sent a plurality of times. A quantity of sending times that is "enabled" by the network device may be agreed in a protocol or configured by using a SIB. For example, the quantity of sending times of the Msg4 is Nrep=2. For a terminal device that supports sending of the Msg4 a plurality of times, the terminal device may select an Msg4 receiving manner based on content indicated by the CSI request field. For a terminal device that does not support receiving of the Msg4 a plurality of times, the terminal device attempts to decode only the Msg4 received for the first time.

In a possible implementation, the network device may configure the plurality of sending times of the first message by using a system message, and then indicate one of the plurality of times to the terminal device by using scheduling signaling. For example, the network device sends the system message. The system message indicates M quantities of sending times of the first message, and M is an integer greater than or equal to 2. The network device sends the second message to the terminal device. The second message includes scheduling signaling, the scheduling signaling indicates the quantity of sending times of the first message, and the quantity of sending times of the first message indicated by the scheduling signaling is one of the M quantities of sending times. The scheduling signaling may include first scheduling signaling used to schedule the Msg2 and/or second scheduling signaling used to schedule the Msg4. For a specific implementation in which the quantity of sending times of the first message is indicated by using the scheduling signaling, refer to the foregoing related content.

In a possible implementation, the quantity of sending times of the first message is associated with a quantity of Msg4 HARQ-ACK repetitions. Optionally, in an implementation, the quantity of sending times of the first message is the same as the quantity of Msg4 HARQ-ACK repetitions. Optionally, in another implementation, there is a correspondence between the quantity of sending times of the first message and the quantity of Msg4 HARQ-ACK repetitions. The correspondence may be pre-agreed, or may be configured by the network device.

In a possible implementation, the quantity of sending times of the first message is associated with a quantity of Msg3 repetitions. Optionally, in an implementation, the quantity of sending times of the first message is the same as the quantity of Msg3 repetitions. Optionally, in another implementation, there is a correspondence between the quantity of sending times of the first message and the quantity of Msg3 repetitions. The correspondence may be pre-agreed, or may be configured by the network device.

Step 302: The network device sends the first message to the terminal device, where the quantity of sending times of the first message is greater than or equal to 2. Correspondingly, the terminal receives the first message from the network device based on the quantity of sending times of the first message.

Optionally, the network device may send the Msg2 for N1 times in N1 consecutive slots, where the Msg2 is sent once in each of the N1 slots.

Optionally, the network device may indicate, to the terminal device, a time-frequency resource used for sending the Msg2 for the first time, for example, a slot used for sending the Msg2 for the first time. The terminal device may receive, based on the slot used for sending the Msg2 for the first time and the quantity N1 of sending times of the Msg2, the Msg2 in the slot and in the N1 consecutive slots including the slot.

Similarly, the network device may send the Msg4 for N2 times in N2 consecutive slots, where the Msg4 is sent once in each of the N2 slots. N2 may be equal to N1, or may not be equal to N1. This is not limited in this application. The network device may indicate, to the terminal device, a time-frequency resource used for sending the Msg4 for the first time, for example, a slot used for sending the Msg4 for the first time. The terminal device may receive, based on the slot used for sending the Msg4 for the first time and the quantity N2 of sending times of the Msg4, the Msg4 in the slot and in the N2 consecutive slots including the slot.

The procedure shown in FIG. 3 may be used to send the Msg2 and/or the Msg4 a plurality of times, and may enhance downlink coverage of a downlink data channel in an NTN scenario.

In a possible implementation, if a third message is repeatedly transmitted (to be specific, the third message is sent in a transmission manner of sending the third message a plurality of times), the first message is also repeatedly transmitted (to be specific, the first message is sent in a transmission manner of sending the first message a plurality of times). In other words, a repeated transmission request of the third message may be associated with the request for sending the first message a plurality of times, or the repeated transmission request of the third message may be associated with sending the first message a plurality of times. The third message may be the Msg4 HARQ-ACK or the Msg3.

For example, a request for sending the Msg4 a plurality of times is associated with a Msg4 HARQ-ACK repetition request. Signaling of the Msg4 HARQ-ACK repetition request is carried by higher layer signaling of the Msg3.

For another example, a request for sending the Msg4 a plurality of times is associated with a repetition request of the Msg3. Signaling of the repetition request of the Msg3 is carried in a specific PRACH resource group, and a PRACH resource in the group carries the repetition request of the Msg3 from the terminal device.

In a possible implementation, the procedure shown in FIG. 3 further includes the following steps:
Step 300: The terminal device reports the first terminal capability to the network device or requests the network device to send the first message a plurality of times.

A possible implementation of step 300 is that the terminal device sends an Msg1 to the network device based on a first PRACH resource. The first PRACH resource belongs to a first PRACH resource group, the first PRACH resource group corresponds to a first sending manner of the Msg2 and/or the Msg4 or corresponds to the first terminal capability, and the first sending manner is performing sending a plurality of times. In other words, if the terminal device sends the Msg1 by using a specific PRACH resource (for example, the first PRACH resource), it indicates that the terminal device has the first terminal capability, or indicates that the terminal device requests the network device to send the Msg2 and/or the Msg4 a plurality of times.

Optionally, the network device may configure PRACH resource groups, for example, configure the first PRACH resource group and a second PRACH resource group, or configure more PRACH resource groups. This is not limited in this application. The first PRACH resource group corresponds to (or is associated with) a first sending manner of the Msg2 and/or the Msg4, or corresponds to (or is associated with) the first terminal capability. The second PRACH resource group corresponds to a second sending manner of the Msg2 and/or the Msg4, or corresponds to a second terminal capability. The second sending manner indicates that the Msg2 and/or the Msg4 are/is sent only once, and the second terminal capability indicates that the terminal device does not have a capability of receiving the Msg2 and/or the Msg4 that are/is sent a plurality of times. If the terminal device has the first terminal capability, the terminal device may send the Msg1 based on the PRACH resource in the first PRACH resource group; or if the terminal device has the first terminal capability and current reception performance or channel quality is poor, the terminal device may send the Msg1 based on the PRACH resource in the first PRACH resource group. If the terminal device does not have the first terminal capability, the terminal device sends the Msg1 based on the PRACH resource in the second PRACH resource group; or if the terminal device has the first terminal capability and current reception performance or channel quality is good, the terminal device sends the Msg1 based on the PRACH resource in the second PRACH resource group.

The PRACH resource may include one or more of the following types of resources: a time domain resource, a frequency domain resource, a code domain resource (for example, a preamble sequence), and the like. In this embodiment of this application, one or more of the foregoing types of resources may be grouped to form different PRACH resource groups. For example, a preamble (preamble) sequence included in the first PRACH resource group is different from a preamble sequence included in the second PRACH resource group. For another example, a random access occasion (random access occasion, RO) included in the first PRACH resource group is different from an RO included in the second PRACH resource group. The RO indicates a time domain resource and/or a frequency domain resource for random access.

In a possible implementation of configuring the PRACH resource group, the network device sends first configuration information of the first PRACH resource group, where the first configuration information indicates that the first PRACH resource group corresponds to the first sending manner of the Msg2 and/or the Msg4, or indicates that the first PRACH resource group corresponds to the first terminal capability.

Optionally, the first configuration information may be sent by using a system message. For example, a SIB sent by the network device includes the first configuration information.

Optionally, the first configuration information may include first indication information, or include second indication information, or include the first indication information and the second indication information. The first indication information indicates that the first PRACH resource group corresponds to the first sending manner of the Msg2, or indicates that the first PRACH resource group corresponds to the first terminal capability, where the first terminal capability is a capability of receiving the Msg2 that is sent a plurality of times. The second indication information indicates that the first PRACH resource group corresponds to the first sending manner of the Msg4, or indicates that the first PRACH resource group corresponds to the first terminal capability, where the first terminal capability is a capability of receiving the Msg4 that is sent a plurality of times.

For example, an information element like an NR feature or a FeatureCombination may be set in a SIB, where the information element is associated with the first PRACH resource group, and the information element includes the first indication information and/or the second indication information, so that the information element indicates that the first PRACH resource group corresponds to the first sending manner of the Msg2 and/or the Msg4, or indicate that the first PRACH resource group corresponds to the first terminal capability.

The following code shows some content included in the FeatureCombination information element as an example, where the FeatureCombination information element is associated with the first PRACH resource group.

The FeatureCombination information element may include:

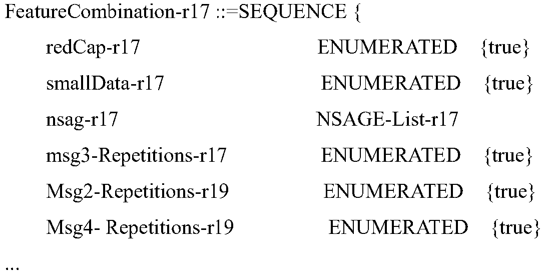

Herein, Msg2-Repetitions-r19 is a feature (feature) corresponding to the Msg2. If the feature is enabled (that is, set to true), it indicates that the Msg2 is sent a plurality of times. Otherwise, it indicates that the Msg2 is sent only once. Similarly, Msg4-Repetitions-r19 is a feature (feature) corresponding to the Msg4. If the feature is enabled (that is, set to true), it indicates that the Msg4 is sent a plurality of times. Otherwise, it indicates that the Msg2 is sent only once.

Optionally, the FeatureCombination information element may include Msg2-Repetitions-r19 but not include Msg4-Repetitions-r19, or include Msg4-Repetitions-r19 but not include Msg2-Repetitions-r19, or include both Msg2-Repetitions-r19 and Msg4-Repetitions-r19.

It may be understood that Msg2-Repetitions-r19 set to "true" corresponds to the first indication information, and Msg4-Repetitions-r19 set to "true" corresponds to the second indication information.

The network device may further configure PRACH resources in the first PRACH resource group. Optionally, when the first configuration information indicates that the Msg2 and/or the Msg4 are/is sent a plurality of times, the PRACH resources in the first PRACH resource group may be configured by using second configuration information.

In a possible implementation of configuring the PRACH resource, the network device sends the second configuration information of the first PRACH resource group, where the second configuration information indicates the PRACH resources included in the first PRACH resource group, and the PRACH resources included in the first PRACH resource group include the first PRACH resource.

Optionally, the second configuration information may be sent by using a system message. For example, a SIB sent by the network device includes the second configuration information. For example, the network device may configure the PRACH resource in the first PRACH resource group in the FeatureCombinationPreambles information element. For example, the network device indicates, in the information element, an identifier of a preamble sequence included in the first PRACH resource group, or indicates a random access occasion (RO) included in the first PRACH resource group.

A possible implementation of step 300 is as follows: The terminal device sends the Msg3 to the network device, where the Msg3 includes third indication information, and the third indication information indicates that the terminal device has a capability of receiving the Msg4 that is sent a plurality of times, or the third indication information is used to request to send the Msg4 a plurality of times.

In a possible implementation, the third indication information is located in a message payload (payload) of the Msg3, for example, may be carried in a spare (spare) bit in the message payload of the Msg3. The message payload of the Msg3 is sent on an uplink common control channel (common control channel, CCCH). In a possible implementation, a length of the payload is 48 bits.

For example, the following code example shows content included in a 48-bit payload (CCCH) of the Msg3:

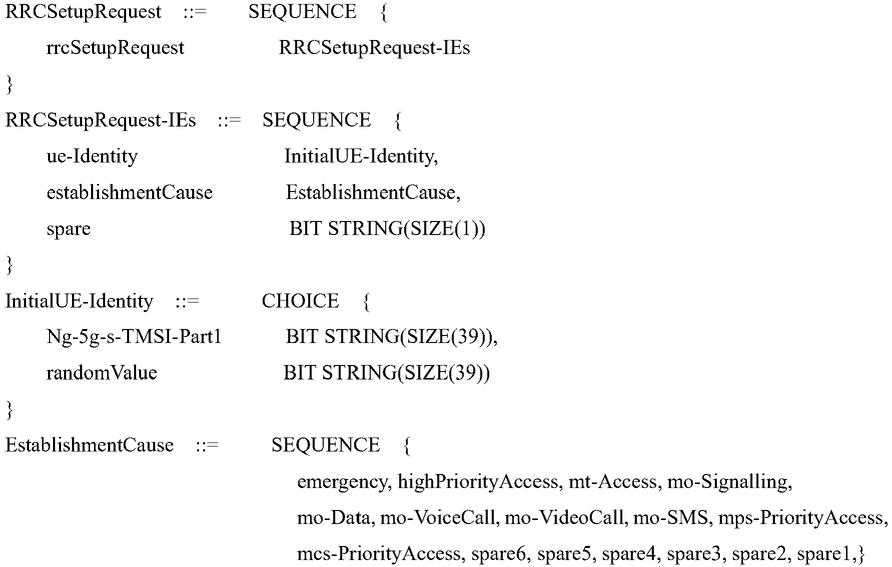

The RRCSetupRequest-IEs includes 1 spare bit. The EstablishmentCause field is an 8-bit field, and currently, six reserved codepoints (spare positions) in codepoints formed by the field are available.

For example, in this embodiment of this application, the third indication information may be carried in the EstablishmentCause field in the message payload of the Msg3. For example, a reserved codepoint of the EstablishmentCause may indicate that the terminal device has a capability of receiving the Msg4 that is sent a plurality of times, or is used to request to send the Msg4 a plurality of times. For example, a most significant bit in the EstablishmentCause field is used for indication. When a value of the most significant bit is equal to 1, it indicates that the terminal device has the capability of receiving the Msg4 that is sent a plurality of times, or is used to request to send the Msg4 a plurality of times.

For another example, the RRCSetupRequest-IEs field in the message payload of the Msg3 includes one idle bit. In this embodiment of this application, the bit may indicate that the terminal device has the capability of receiving the Msg4 that is sent a plurality of times, or is used to request to send the Msg4 a plurality of times. For example, when a value of the bit is equal to 1, it indicates that the terminal device has the capability of receiving the Msg4 that is sent a plurality of times, or is used to request to send the Msg4 a plurality of times.

The foregoing merely lists several examples in which the message payload of the Msg3 indicates that the terminal device has the capability of receiving the Msg4 that is sent a plurality of times, or is used to request to send the Msg4 a plurality of times. This is not limited in this application.

In a possible implementation, the third indication information is located in a medium access control (media access control, MAC) subheader of the Msg3.

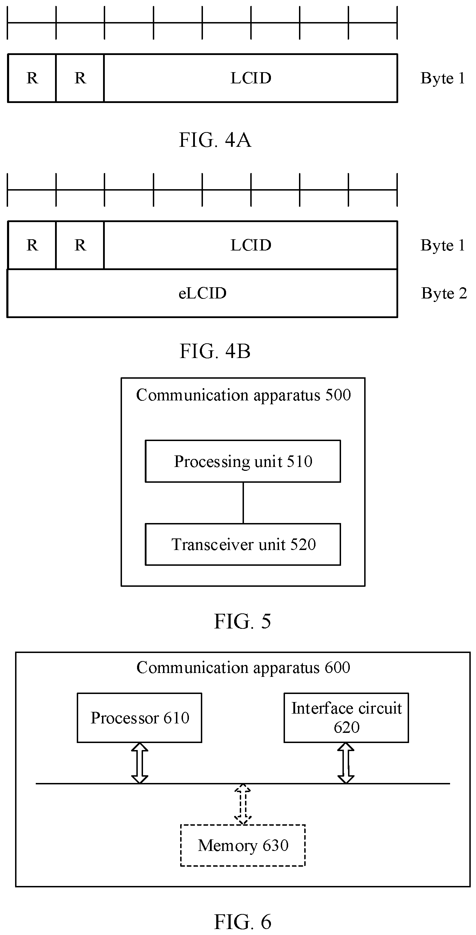

FIG. 4A and FIG. 4B illustrate content included in the MAC subheader of the Msg3. FIG. 4A shows a MAC subheader that does not include an eLCID field, and FIG. 4B shows a MAC subheader that includes an eLCID field. When a quantity of logical channel identifier (logical channel identifier, LCID) codepoints is equal to 34, the MAC subheader uses a long format and includes an additional extended LCID (eLCID), where the eLCID includes 289 reserved codepoints (reserved codepoints) that are not used, as shown in FIG. 4B.

The codepoints of the LCID may be shown in Table 4.

**Table 4: LCID values of an uplink control channel (control channel, SCH)**

| Codepoint/Index | LDIC values |
|---|---|
| 0 | CCCH with a size of 64 bits (which is referred to as "CCCH1" in TS 38.331 [5], except for reduced capability (reduced capability, RedCap) UE) |
| 1 to 32 | Logical channel identifiers of a dedicated control channel (dedicated control channel, DCCH) and a dedicated traffic channel (dedicated traffic channel, DTCH) |
| 33 | Extended logical channel identifier field (2-byte eLCID field) |
| 34 | Extended logical channel identifier field (1-byte eLCID field) |

A codepoint of the 1-byte eLCID may be shown in Table 5.

**Table 5: 1-byte eLCID value of an uplink SCH**

| Codepoint | Index | LCID values |
|---|---|---|
| 0 to 228 | 64 to 292 | Reserved (reserved) |

For example, the third indication information may be carried in an R field of the MAC subheader (MAC subheader). The R field in the MAC subheader includes two bits, and the two bits are reserved (reserved) bits. In this embodiment of this application, one bit may be used to indicate that the terminal device has a capability of receiving the Msg4 that is sent a plurality of times, or is used to request to send the Msg4 a plurality of times.

For another example, the third indication information may be carried in the LCID field in the MAC subheader. The field is used to carry an LCID, and the LCID includes seven reserved codepoints (reserved codepoints), which are respectively 37 to 42 and 47. In a possible implementation, one of the reserved codepoints may indicate that the terminal device has a capability of receiving the Msg4 that is sent a plurality of times, or is used to request to send the Msg4 a plurality of times. In another possible implementation, on a basis that four of the reserved codepoints indicate that the terminal device has a capability of receiving the Msg4 that is sent a plurality of times or is used to request to send the Msg4 a plurality of times, the four reserved codepoints may be further associated with at least two of four features (features), for example, the third indication information is jointly encoded with the four features. The four features are respectively: RedCap UE, non-RedCap UE, a size of a first type of CCCH payload (namely, a message payload of the Msg3), and a size of a second type of CCCH payload. In other words, the four reserved codepoints may indicate that the terminal device has a capability of receiving the Msg4 that is sent a plurality of times or is used to request to send the Msg4 a plurality of times, and may also indicate the four features.

For another example, the third indication information may be carried in an eLCID field. The field is used to carry an eLCID, and the eLCID includes 289 reserved codepoints (reserved codepoints). When a MAC subheader of the Msg3 uses a long format (where a length of a codepoint of an LCID is 34), there are a large quantity of unused codepoints (codepoints) in the eLCID field, for example, up to 289. In a possible implementation, one of the reserved codepoints may indicate that the terminal device has a capability of receiving the Msg4 that is sent a plurality of times, or is used to request to send the Msg4 a plurality of times. In another possible implementation, on a basis that four of the reserved codepoints indicate that the terminal device has a capability of receiving the Msg4 that is sent a plurality of times or is used to request to send the Msg4 a plurality of times, the four reserved codepoints may be further associated with at least two of four features (features), for example, the third indication information is jointly encoded with the four features. The four features are respectively: RedCap UE UE, non-RedCap UE UE, a size of a first type of CCCH payload (namely, a message payload of the Msg3), and a size of a second type of CCCH payload. Compared with associating the third indication information and the foregoing four features by using the reserved codepoints of the LCID, associating the third indication information and the foregoing four features by using the reserved codepoints of the eLCID can more properly use resources.

Considering that the satellite covers a wide area and covers a large quantity of users, only a part of the terminal devices may have a coverage enhancement requirement. The terminal device reports the first terminal capability or requests to send the first message a plurality of times, so that the network device can implement related configurations such as a quantity of sending times of the first message at the UE level. Therefore, related configurations of sending the first message a plurality of times are more flexible.

In some embodiments of this application, the terminal device having the first terminal capability may report the first terminal capability to the network device or request the network device to send the first message a plurality of times only when a specific condition is met. For example, when the reception performance or the channel quality of the terminal device is poor, the terminal device may not receive the first message sent by the network device. In this case, the terminal device may report the first terminal capability to the network device or request the network device to send the first message a plurality of times, so that the network device sends the first message a plurality of times, thereby enhancing downlink coverage of the first message. When the reception performance or the channel quality of the terminal device is good, the terminal device may not report the first terminal capability to the network device or request the network device to send the first message a plurality of times, and the network device may send the first message only once, thereby reducing network resource overheads.

In a possible implementation, if the reception performance parameter of the terminal device is lower than a specified requirement, the first terminal capability is reported to the network device or the first message is requested to be sent a plurality of times.

Optionally, the reception performance parameter includes a communication elevation angle or a value range of the communication elevation angle. If the communication elevation angle is less than or equal to a communication elevation angle threshold, or a value of the communication elevation angle is within a first value range, it indicates that the reception performance of the terminal device is poor. In this case, the terminal device reports the first terminal capability to the network device or requests the network device to send the first message a plurality of times. For a specific implementation, refer to the foregoing embodiment. A possible value range of the communication elevation angle may be pre-divided into at least two value intervals. A communication elevation angle value corresponding to a first value interval is small. When the value of the communication elevation angle of the terminal device falls within the first value interval, it indicates that the reception performance of the terminal device is poor.

Optionally, the communication elevation angle threshold may be preset, or may be configured by the network device. For example, the network device may configure the communication elevation angle threshold for the terminal device by using a system message or scheduling signaling (for example, DCI), to improve system flexibility.

The terminal device may calculate the communication elevation angle based on ephemeris information of a satellite on which a satellite-mounted base station is located and the position of the global navigation satellite system (global navigation satellite system, GNSS). The satellite-mounted base station may send the ephemeris information by using a system message (for example, a SIB). A manner in which the terminal device calculates the communication elevation angle is not limited in this embodiment of this application.

Optionally, the reception performance parameter includes a receive gain or a receive gain level. If the receive gain is less than or equal to the receive gain threshold, or the receive gain level is less than or equal to the receive gain level threshold, it indicates that the reception performance of the terminal device is poor. In this case, the terminal device reports the first terminal capability to the network device or requests the network device to send the first message a plurality of times. For a specific implementation, refer to the foregoing embodiment. The possible value range of the receive gain may be pre-divided into at least two receive gain levels in ascending order of values, and a lower receive gain level indicates a lower corresponding receive gain. When the receive gain level corresponding to the receive gain of the terminal device is less than or equal to the receive gain level threshold, it indicates that the reception performance of the terminal device is poor.

Optionally, the receive gain threshold and the receive gain level threshold may be preset, or may be configured by the network device. For example, the network device may configure the receive gain threshold and the receive gain level threshold for the terminal device by using a system message or scheduling signaling (for example, DCI), to improve system flexibility.

The receive gain of the terminal device is related to the receive antenna gain, noise, temperature, and the like. The magnitude of the receive gain may be represented by a reception performance index G/T. G/T is an indicator for measuring reception performance, and a formula for calculating G/T may be: G/T=G-10lgTe dB/K. G is a receive gain of an antenna, and Te is equivalent noise of a receive system. It can be seen from the formula that a larger G/T value indicates better reception performance. A method for calculating the receive gain is not limited in this embodiment of this application.

Optionally, the reception performance parameter includes received signal strength or a received signal strength level. If the terminal device detects a downlink signal, for example, a synchronization signal and a physical broadcast channel (physical broadcast channel, PBCH) block (Synchronization Signal and PBCH block, SSB), and the received signal strength is less than or equal to the received signal strength threshold, or the received signal strength level is less than or equal to the received signal strength level threshold, it indicates that the reception performance of the terminal device is poor. In this case, the terminal device reports the first terminal capability to the network device or requests the network device to send the first message a plurality of times. For a specific implementation, refer to the foregoing embodiment. The possible value range of the received signal strength may be pre-divided into at least two received signal strength levels in ascending order of values. A lower received signal strength level indicates a lower corresponding received signal strength. When the received signal strength level corresponding to the received signal strength of the terminal device is less than or equal to the received signal strength level threshold, it indicates that the reception performance of the terminal device is poor.

Optionally, the received signal strength may be RSRP.

Optionally, an RSRP threshold may be indicated by using an offset (offset) of the Msg3 repetition RSRP threshold. In other words, the RSRP threshold for triggering sending of the Msg4 a plurality of times is obtained based on the Msg3 repetition RSRP threshold and the offset (offset). The Msg3 repetition RSRP threshold is used to trigger sending of the Msg3 a plurality of times. In other words, when detecting that the RSRP is less than or equal to the Msg3 repetition RSRP threshold, the terminal device sends the Msg3 a plurality of times.

Optionally, an RSRP threshold may be indicated by using an offset (offset) of the Msg4 HARQ-ACK repetition RSRP threshold. In other words, the RSRP threshold for triggering sending of the Msg4 a plurality of times is obtained based on the Msg4 HARQ-ACK repetition RSRP threshold and the offset (offset). The Msg4 HARQ-ACK repetition RSRP threshold is used to trigger sending of the Msg4 HARQ-ACK a plurality of times. In other words, when detecting that the RSRP is less than or equal to the Msg4 HARQ-ACK repetition RSRP threshold, the terminal device sends the Msg4 HARQ-ACK a plurality of times.

Optionally, the received signal strength threshold and the received signal strength level threshold may be preset, or may be configured by the network device. For example, the network device may configure the received signal strength threshold and the received signal strength level threshold for the terminal device by using a system message or scheduling signaling (for example, DCI), to improve system flexibility.

In a possible implementation, the reception performance parameter includes at least two of the following three parameters: (1) a communication elevation angle or a value range of the communication elevation angle; (2) a receive gain or a receive gain level; and (3) a received signal strength or a received signal strength level. Correspondingly, when determining that the condition corresponding to the corresponding parameter is met, the terminal device reports the first terminal capability to the network device or requests the network device to send the first message a plurality of times. For example, when the reception performance parameter includes the communication elevation angle and the received signal strength, if the terminal device determines that the communication elevation angle is less than or equal to the communication elevation angle threshold, and the received signal strength is less than or equal to the received signal strength threshold, the terminal device reports the first terminal capability to the network device or requests the network device to send the first message a plurality of times.

In a possible implementation, there is a correspondence between the reception performance parameter and the quantity of sending times of the first message. The terminal device may send the reception performance parameter to the network device, and the network device determines, based on the correspondence, the quantity of sending times corresponding to the received reception performance parameter, and indicates the quantity of sending times to the terminal device.

For example, the terminal device may send the reception performance parameter to the network device by using the Msg1, and the network device may send, to the terminal device by using the Msg2, the quantity of sending times of the Msg4 corresponding to the reception performance parameter, and send the Msg4 to the terminal device based on the quantity of sending times. For example, the terminal device may send the value of the communication elevation angle, or the index value corresponding to the communication elevation angle, or the indication information of the value range of the communication elevation angle, or the like to the network device.

For another example, the terminal device may send the reception performance parameter to the network device by using the Msg1, and the network device may determine, based on the reception performance parameter, the quantity of sending times of the Msg2 corresponding to the reception performance parameter, and send the Msg2 to the terminal device based on the quantity of sending times. Alternatively, the terminal device may determine a corresponding quantity of sending times based on the reception performance parameter, and receive, based on the quantity of sending times, the Msg2 sent by the network device. Similarly, the terminal device may send the reception performance parameter to the network device by using the Msg1, and the network device may determine, based on the reception performance parameter, the quantity of sending times of the Msg4 corresponding to the reception performance parameter, and send the Msg4 to the terminal device based on the quantity of sending times. Alternatively, the terminal device may determine a corresponding quantity of sending times based on the reception performance parameter, and receive, based on the quantity of sending times, the Msg4 sent by the network device.

In a possible implementation, in this embodiment, for downlink data channel transmission, demodulation reference signal (demodulation reference signal, DMRS) bundling (DMRS bundling) may be enabled, and a window length of the DMRS bundling is indicated to the terminal device, so that the terminal device performs joint channel decoding based on the window length of the DMRS bundling. In other words, joint channel estimation is performed on DMRSs sent in a plurality of slots corresponding to the window length of the DMRS bundling. The window length of the DMRS bundling may be a plurality of consecutive slots.

In a possible implementation, the network device may enable the DMRS bundling by using configuration signaling. For example, the network device may send third configuration information, where the third configuration information is used to enable the DMRS bundling for a downlink channel corresponding to the first message. Optionally, the third configuration information may be sent by using the system message. For example, the network device configures a parameter DMRS_bundling_Msg2PDSCH in a SIB message, to indicate, to the terminal device, to enable downlink joint channel estimation for the Msg2 (where the Msg2 has been enabled to be sent a plurality of times). For another example, the network device configures a parameter DMRS_bundling_Msg4PDSCH in a SIB message, to indicate, to the terminal device, to enable downlink joint channel estimation for the Msg4 (where the Msg4 has been enabled to be sent a plurality of times).

In a possible implementation, the network device may enable DMRS bundling and enable sending of the first message a plurality of times by using scheduling signaling used to schedule the first message. For example, the network device may enable, by using the scheduling signaling, sending of the first message a plurality of times, and may use one bit in the scheduling signaling to indicate to enable the DMRS bundling.

In a possible implementation, the window length of the DMRS bundling is associated with the quantity of sending times of the first message. For example, a quantity of slots corresponding to the window length of the DMRS bundling may be the same as the quantity of sending times of the first message, or the window length of the DMRS bundling is greater than the quantity of sending times of the first message, or there is a correspondence between the window length of the DMRS bundling and the quantity of sending times of the first message. Optionally, the correspondence may be pre-agreed or may be configured by the network device. This is not limited in this application.

In a possible implementation, the window length of the DMRS bundling is notified to the terminal device by using configuration signaling. For example, the network device may send fourth configuration information, where the fourth configuration information indicates the window length of the DMRS bundling. Optionally, the fourth configuration information may be sent by using a SIB message.

In a possible implementation, the network device may notify the terminal device of the window length of the DMRS bundling by using scheduling signaling. For example, the network device may indicate the window length of the DMRS bundling to the terminal device by using the scheduling signaling used to schedule the first message.

In a possible implementation, for another downlink data channel, for example, a PDSCH, the network device may set indication information in a SIB. For example, the indication information is DMRS_bundling_PHY_PDSCH_WindowLength, to indicate, to the terminal device, the window length of the DMRS bundling configured by the network side.

It may be understood that, to implement the functions in the foregoing embodiments, a network device and a terminal device include corresponding hardware structures and/or software modules for performing the functions. A person skilled in the art should easily be aware that, in combination with the units and method steps in the examples described in embodiments disclosed in this application, this application can be implemented by hardware or a combination of hardware and computer software. Whether a function is performed by hardware or hardware driven by computer software depends on particular application scenarios and design constraints of the technical solutions.

FIG. 5 and FIG. 6 are diagrams of structures of possible communication apparatuses according to embodiments of this application. These communication apparatuses may be configured to implement functions of the terminal device or the network device in the foregoing method embodiments, and therefore can also achieve beneficial effects of the foregoing method embodiments. In embodiments of this application, the communication apparatus may be the terminal device shown in FIG. 1, FIG. 2A, FIG. 2B, or FIG. 2C, or may be the base station shown in FIG. 1, FIG. 2A, FIG. 2B, or FIG. 2C, or may be a module (for example, a chip) used in a terminal or a base station.

As shown in FIG. 5, a communication apparatus 500 may include a processing unit 510 and a transceiver unit 520. The communication apparatus 500 is configured to implement functions of the terminal device or the network device in the method embodiment shown in FIG. 3.

When the communication apparatus 500 is configured to implement the functions of the terminal device in the method embodiment shown in FIG. 3, the processing unit 510 is configured to determine a quantity of sending times of a first message, where the quantity of sending times is an integer greater than or equal to 2, and the first message includes an Msg2 and/or an Msg4; and the processing unit 510 is further configured to receive, by using the transceiver unit 520, the first message from the network device based on the quantity of sending times of the first message.

When the communication apparatus 500 is configured to implement the functions of the network device in the method embodiment shown in FIG. 3, the processing unit 510 is configured to determine to send a first message a plurality of times, where the first message includes an Msg2 and/or an Msg4; and the processing unit 510 is further configured to send the first message to the terminal device by using the transceiver unit 520 based on the quantity of sending times of the first message, where the quantity of sending times is an integer greater than or equal to 2.

For more detailed descriptions of the processing unit 510 and the transceiver unit 520, directly refer to the related descriptions in the method embodiment shown in FIG. 3. Details are not described herein again.

As shown in FIG. 6, a communication apparatus 600 includes a processor 610 and an interface circuit 620. The processor 610 and the interface circuit 620 are coupled to each other. It may be understood that the interface circuit 620 may be a transceiver or an input/output interface. Optionally, the communication apparatus 600 may further include a memory 630, configured to: store instructions executed by the processor 610, store input data required by the processor 610 to run the instructions, or store data generated after the processor 610 runs the instructions.

When the communication apparatus 600 is configured to implement the method shown in FIG. 3, the processor 610 is configured to implement functions of the processing unit 510, and the interface circuit 620 is configured to implement functions of the transceiver unit 520.

When the communication apparatus is a chip used in a terminal device, the terminal chip implements a function of the terminal device in the foregoing method embodiment. The terminal chip receives information from another module (for example, a radio frequency module or an antenna) in the terminal device, where the information is sent by a network device to the terminal; or the terminal chip sends information to another module (for example, a radio frequency module or an antenna) in the terminal device, where the information is sent by the terminal device to a network device.

When the communication apparatus is a module used in a network device, the module in the network device implements a function of the network device in the foregoing method embodiment. The module in the network device receives information from another module (for example, a radio frequency module or an antenna) in the network device, where the information is sent by a terminal to the network device; or the module in the network device sends information to another module (for example, a radio frequency module or an antenna) in the network device, where the information is sent by the network device to a terminal. The network device module herein may be a baseband chip of the network device, or may be a DU or another module. The DU herein may be a DU in an open radio access network (open radio access network, O-RAN) architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

This application provides another example of a communication apparatus. The communication apparatus includes at least one processor and at least one memory. The at least one processor is coupled to the at least one memory. The at least one memory is configured to store instructions. When the instructions are executed by the at least one processor, the communication apparatus is enabled to perform the method in the foregoing embodiments. For example, the communication apparatus includes one processor and one memory. As shown in FIG. 6, the communication apparatus 600 includes one processor 610 and one memory 630. The processor 610 is coupled to the memory 630. The memory 630 stores instructions. When the instructions stored in the memory 630 are executed by the processor 610, the communication apparatus 600 performs the method performed by the terminal device or the network device in the foregoing embodiments.

It should be understood that the processor 610 and the memory 630 may alternatively be integrated together, for example, integrated into one chip.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the network device or the terminal. Alternatively, the processor and the storage medium may exist in a network device or a terminal as discrete components.

All or some of the foregoing embodiments may be implemented by using software, hardware, firmware, or any combination thereof. When the software is used to implement the foregoing embodiments, all or a part of the foregoing embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: a volatile storage medium and a nonvolatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
determining a quantity of sending times of a first message, wherein the quantity of sending times is an integer greater than or equal to 2, and the first message comprises an Msg2 and/or an Msg4; and
receiving the first message from a network device based on the quantity of sending times of the first message.

2. The method according to claim 1, further comprising:
reporting a first terminal capability to the network device or requesting the network device to send the first message a plurality of times, wherein the first terminal capability is a capability of receiving the first message that is sent a plurality of times.

3. The method according to claim 2, wherein reporting the terminal capability to the network device or requesting the network device to send the first message a plurality of times comprises:
sending an Msg1 to the network device based on a first physical random access channel PRACH resource, wherein the first PRACH resource belongs to a first PRACH resource group, the first PRACH resource group corresponds to a first sending manner of the first message or corresponds to the first terminal capability, and the first sending manner is performing sending a plurality of times.

4. The method according to claim 3, further comprising:
receiving first configuration information of the first PRACH resource group from the network device, wherein the first configuration information indicates that the first PRACH resource group corresponds to the first sending manner of the first message, or indicates that the first PRACH resource group corresponds to the first terminal capability.

5. The method according to claim 4, wherein the first configuration information comprises first indication information, or comprises second indication information, or comprises the first indication information and the second indication information;
the first indication information indicates that the first PRACH resource group corresponds to a first sending manner of the Msg2, or indicates that the first PRACH resource group corresponds to the first terminal capability, wherein the first terminal capability is a capability of receiving the Msg2 that is sent a plurality of times; and
the second indication information indicates that the first PRACH resource group corresponds to a first sending manner of the Msg4, or indicates that the first PRACH resource group corresponds to the first terminal capability, wherein the first terminal capability is a capability of receiving the Msg4 that is sent a plurality of times.

6. The method according to any one of claims 3 to 5, further comprising:
receiving second configuration information of the first PRACH resource group from the network device, wherein the second configuration information indicates PRACH resources comprised in the first PRACH resource group, and the PRACH resources comprised in the first PRACH resource group comprise the first PRACH resource.

7. The method according to claim 2, wherein reporting the first terminal capability to the network device or requesting the network device to send the first message a plurality of times comprises:
sending an Msg3 to the network device, wherein the Msg3 comprises third indication information, and the third indication information indicates that a terminal device has a capability of receiving the Msg4 that is sent a plurality of times, or the third indication information is used to request to send the Msg4 a plurality of times.

8. The method according to claim 7, wherein the third indication information is located in a message payload of the Msg3; or the third indication information is located in a medium access control MAC subheader of the Msg3.

9. The method according to claim 8, wherein the third indication information is carried in an R field, a logical channel identifier field, or an extended logical channel identifier field of the MAC subheader.

10. The method according to any one of claims 2 to 9, wherein reporting the first terminal capability to the network device or requesting the network device to send the first message a plurality of times comprises:
if a reception performance parameter of the terminal device is lower than a specified requirement, reporting the first terminal capability to the network device or requesting the network device to send the first message a plurality of times.

11. The method according to claim 10, wherein the reception performance parameter comprises one or more of the following: a communication elevation angle or a value range of the communication elevation angle, a receive gain or a receive gain level, or a received signal strength or a received signal strength level; and
that the reception performance parameter of the terminal device is lower than the specified requirement comprises one or more of the following:
the communication elevation angle of the terminal device is less than or equal to a communication elevation angle threshold; or
the receive gain of the terminal device is less than or equal to a receive gain threshold, or the receive gain level of the terminal device is less than or equal to a receive gain level threshold; or
the received signal strength of the terminal device is less than or equal to a received signal strength threshold, or the received signal strength level of the terminal device is less than or equal to a received signal strength level threshold.

12. The method according to claim 10 or 11, further comprising: sending the reception performance parameter of the terminal device to the network device, wherein
the quantity of sending times of the first message corresponds to the reception performance parameter of the terminal device.

13. The method according to any one of claims 1 to 12, wherein determining the quantity of sending times of the first message comprises:
receiving a second message from the network device, wherein the second message indicates the quantity of sending times of the first message; and
determining the quantity of sending times of the first message based on the second message.

14. The method according to claim 13, wherein before receiving the second message from the network device, the method further comprises: receiving a system message from the network device, wherein the system message indicates M quantities of sending times of the first message, and M is an integer greater than or equal to 2; and
the second message comprises scheduling signaling, the scheduling signaling indicates the quantity of sending times of the first message, and the quantity of sending times of the first message indicated by the scheduling signaling is one of the M quantities of sending times.

15. The method according to claim 13 or 14, wherein the second message comprises first scheduling signaling used to schedule the Msg2 and/or second scheduling signaling used to schedule the Msg4, the first scheduling signaling indicates a quantity of sending times of the Msg2, or indicates a quantity of sending times of the Msg2 and a quantity of sending times of the Msg4, and the second scheduling signaling indicates the quantity of sending times of the Msg4.

16. The method according to claim 15, wherein a group of resource information corresponding to a row index indicated by a time domain resource assignment TDRA field in the first scheduling signaling comprises the quantity of sending times of the Msg2; and/or
a group of resource information corresponding to a row index indicated by a TDRA field in the second scheduling signaling comprises the quantity of sending times of the Msg4.

17. The method according to claim 15, wherein N bits of a modulation and coding scheme MCS field in the first scheduling signaling indicate the quantity of sending times of the Msg2, the N bits are N bits starting from a most significant bit of the MCS field, and N is an integer greater than or equal to 1; and/or
N bits of an MCS field in the second scheduling signaling indicate the quantity of sending times of the Msg4, and the N bits are N bits starting from a most significant bit of the MCS field.

18. The method according to claim 15, wherein a first value of a transport block scaling factor in the first scheduling signaling is associated with one of M quantities of sending times of the Msg2, and M is an integer greater than or equal to 2.

19. The method according to claim 13, wherein the second message is a system message.

20. The method according to claim 13, wherein the second message is the Msg2, and the Msg2 indicates a quantity of sending times of the Msg4.

21. The method according to any one of claims 1 to 12, wherein the quantity of sending times of the first message is associated with a quantity of sending times of an Msg4 HARQ-ACK or a quantity of sending times of the Msg3.

22. The method according to any one of claims 1 to 21, further comprising:
receiving third configuration information from the network device, wherein the third configuration information is used to enable demodulation reference signal DMRS bundling for a downlink channel corresponding to the first message, and a window length of the DMRS bundling is associated with the quantity of sending times of the first message; or
receiving third configuration information and fourth configuration information from the network device, wherein the third configuration information is used to enable DMRS bundling for a downlink channel corresponding to the first message, and the fourth configuration information indicates a window length of the DMRS bundling; or
receiving, from the network device, scheduling signaling used to enable DMRS bundling, wherein the scheduling signaling is further used to schedule the first message, and a window length of the DMRS bundling is associated with the quantity of sending times of the first message.

23. A communication method, comprising:
determining to send a first message a plurality of times, wherein the first message comprises an Msg2 and/or an Msg4; and
sending the first message to a terminal device based on a quantity of sending times of the first message, wherein the quantity of sending times is an integer greater than or equal to 2.

24. The method according to claim 23, wherein determining to send the first message a plurality of times comprises:
receiving a first terminal capability reported by the terminal device to the network device or a request for sending the first message a plurality of times, wherein the first terminal capability is a capability of receiving the first message that is sent a plurality of times; and
determining, based on the first terminal capability reported by the terminal device to the network device or the request for sending the first message a plurality of times, to send the first message to the terminal device a plurality of times.

25. The method according to claim 24, wherein receiving the first terminal capability reported by the terminal device to the network device or the request for sending the first message a plurality of times comprises:
receiving an Msg1 that is sent by the terminal device to the network device based on a first physical random access channel PRACH resource, wherein the first PRACH resource belongs to a first PRACH resource group, the first PRACH resource group corresponds to a first sending manner of the first message or corresponds to the first terminal capability, and the first sending manner is performing sending a plurality of times.

26. The method according to claim 25, further comprising:
sending first configuration information of the first PRACH resource group, wherein the first configuration information indicates that the first PRACH resource group corresponds to the first sending manner of the first message, or indicates that the first PRACH resource group corresponds to the first terminal capability.

27. The method according to claim 26, wherein the first configuration information comprises first indication information, or comprises second indication information, or comprises the first indication information and the second indication information;
the first indication information indicates that the first PRACH resource group corresponds to a first sending manner of the Msg2, or indicates that the first PRACH resource group corresponds to the first terminal capability, wherein the first terminal capability is a capability of receiving the Msg2 that is sent a plurality of times; and
the second indication information indicates that the first PRACH resource group corresponds to a first sending manner of the Msg4, or indicates that the first PRACH resource group corresponds to the first terminal capability, wherein the first terminal capability is a capability of receiving the Msg4 that is sent a plurality of times.

28. The method according to claim 26 or 27, further comprising:
sending second configuration information of the first PRACH resource group, wherein the second configuration information indicates PRACH resources comprised in the first PRACH resource group, and the PRACH resources comprised in the first PRACH resource group comprise the first PRACH resource.

29. The method according to claim 24, wherein receiving the first terminal capability reported by the terminal device to the network device or the request for sending the first message a plurality of times comprises:
receiving an Msg3 from the terminal device, wherein the Msg3 comprises third indication information, and the third indication information indicates that the terminal device has a capability of receiving the Msg4 that is sent a plurality of times, or the third indication information is used to request to send the Msg4 a plurality of times.

30. The method according to claim 29, wherein the third indication information is located in a message payload of the Msg3; or the third indication information is located in a medium access control MAC subheader of the Msg3.

31. The method according to claim 30, wherein the third indication information is carried in an R field, a logical channel identifier field, or an extended logical channel identifier field of the MAC subheader.

32. The method according to any one of claims 23 to 31, further comprising:
receiving reception performance information from the terminal device; and
determining the corresponding quantity of sending times of the first message based on the reception performance information.

33. The method according to any one of claims 23 to 32, further comprising:
sending a second message, wherein the second message indicates the quantity of sending times of the first message.

34. The method according to claim 33, wherein before sending the second message, the method further comprises: sending a system message, wherein the system message indicates M quantities of sending times of the first message, and M is an integer greater than or equal to 2; and
the second message comprises scheduling signaling, the scheduling signaling indicates the quantity of sending times of the first message, and the quantity of sending times of the first message indicated by the scheduling signaling is one of the M quantities of sending times.

35. The method according to claim 33 or 34, wherein the second message comprises first scheduling signaling used to schedule the Msg2 and/or second scheduling signaling used to schedule the Msg4, the first scheduling signaling indicates a quantity of sending times of the Msg2, and the second scheduling signaling indicates a quantity of sending times of the Msg4.

36. The method according to claim 35, wherein N bits of an MCS field in the first scheduling signaling indicate the quantity of sending times of the Msg2, the N bits are N bits starting from a most significant bit of the MCS field, and N is an integer greater than or equal to 1; and/or
N bits of an MCS field in the second scheduling signaling indicate the quantity of sending times of the Msg4, and the N bits are N bits starting from a most significant bit of the MCS field.

37. The method according to claim 35, wherein a first value of a transport block scaling factor in the first scheduling signaling is associated with one of M quantities of sending times of the Msg2, and M is an integer greater than or equal to 2.

38. The method according to claim 33, wherein the second message is a system message.

39. The method according to claim 33, wherein the second message is the Msg2, and the Msg2 indicates a quantity of sending times of the Msg4.

40. The method according to any one of claims 23 to 32, wherein the quantity of sending times of the first message is associated with a quantity of sending times of an Msg4 HARQ-ACK or a quantity of sending times of the Msg3.

41. The method according to any one of claims 23 to 40, further comprising:
sending third configuration information, wherein the third configuration information is used to enable demodulation reference signal DMRS bundling for a downlink channel corresponding to the first message, and a window length of the DMRS bundling is associated with the quantity of sending times of the first message; or
sending third configuration information and fourth configuration information, wherein the third configuration information is used to enable DMRS bundling for a downlink channel corresponding to the first message, and the fourth configuration information indicates a window length of the DMRS bundling; or
sending scheduling signaling used to enable DMRS bundling, wherein the scheduling signaling is further used to schedule the first message, and a window length of the DMRS bundling is associated with the quantity of sending times of the first message.

42. A communication system, comprising a network device and a terminal device, wherein the terminal device is configured to implement the method according to any one of claims 1 to 22, and the network device is configured to implement the method according to any one of claims 23 to 41.

43. A communication apparatus, comprising a unit or module configured to perform the method according to any one of claims 1 to 22, or a unit or module configured to perform the method according to any one of claims 23 to 41.

44. A communication apparatus, comprising one or more processors configured to: perform the method according to any one of claims 1 to 22, or perform the method according to any one of claims 23 to 41.

45. A readable storage medium, wherein the readable storage medium stores a program, and when the program is executed by a communication apparatus, the method according to any one of claims 1 to 22 or the method according to any one of claims 23 to 41 is implemented.

46. A chip system, comprising: a memory, configured to store a computer program; and a processor, wherein after the processor invokes the computer program from the memory and runs the computer program, a communication apparatus on which the chip system is installed is enabled to perform the method according to any one of claims 1 to 22, or perform the method according to any one of claims 23 to 41.

47. A computer program product, wherein when the computer program product is invoked by a computer, the computer is enabled to perform the method according to any one of claims 1 to 22, or perform the method according to any one of claims 23 to 41.
